# EUROPEAN PATENT SPECIFICATION

(11) **EP 1 055 115 B1**
(45) Date of publication and mention of the grant of the patent: **06.02.2008**
(21) Application number: 99909425.3
(22) Date of filing: 08.02.1999
(51) Int. Cl.: G01N 21/35, B07C 5/342

(54) **METHOD AND DEVICE FOR IDENTIFICATION OF A TYPE OF MATERIAL IN AN OBJECT AND UTILIZATION THEREFOR**
VERFAHREN UND VORRICHTUNG ZUM IDENTIFIZIEREN EINER MATERIALSORTE IN EINEM GEGENSTAND UND DEREN ANWENDUNG
PROCEDE ET DISPOSITIF D'IDENTIFICATION DU TYPE DE MATERIAU D'UN OBJET, ET UTILISATION DE CE DISPOSITIF

(30) Priority: 09.02.1998 NO 980545
(43) Date of publication of application: 29.11.2000
(73) Proprietor: Tomra Systems ASA, 1370 Asker (NO)
(72) Inventor: NORDBRYHN, Andreas, N-0874 Oslo (NO); FERBER, Alain, N-1344 Haslum (NO); SAGBERG, Hakon, N-0165 Oslo (NO)
(74) Representative: Onn, Thorsten
(86) International application number: PCT/NO1999/000039
(87) International publication number: WO 1999/040414

(56) References cited:
- DE-A1- 4 340 795
- DE-A1- 19 543 134
- DE-C1- 19 601 923
- US-B1- 6 433 338
- VAN DEN BROEK W.H.A.M. ET AL: 'Identification of Plastics among Nonplastics in Mixed Waste by Remote Sensing Near-Infrared Imaging Spectroscopy. 1. Image Improvement and Analysis by Singular Value Decomposition' ANAL. CHEM. vol. 67, no. 20, 15 October 1995, WASHINGTON, DC, US, pages 3753 - 3759, XP000541459

## Description

The present invention relates to a method and an apparatus for identifying a type of material in a physical article, such as a wholly or partly transparent bottle of plastics or glass, the article in a continuous or discontinuous movement being caused to pass through a detector station, by means of the detector station illuminating the article by light rays from an infrared radiation source, detecting light rays which nonabsorbed have passed through the article, and thereafter carrying out a correlation analysis of such detected light rays, as is set forth in the preamble of the enclosed claims 1 and 17.

Identification of different material types, and especially tyes of plastics, is a problem area of growing importance, partly as a result of materials recycling becoming a progressively higher priority, from both a private financial and a socio-economic point of view. If collection programmes for used materials are to be of maximum profitability, it is essential to ensure that the materials are as pure as possible as early as possible in the collection and handling chain. Pure materials have a value as raw materials for re-use, and there is a well-developed market and industry which handle such materials. If the materials are not pure, payment must often be made for their disposal.

A number of methods for identifying different types of plastics are previously known. A reliable method, which is frequently used, is spectroscopy in the infrared range. All known instruments for such spectroscopic identification of plastics arc costly, as both the wave-length selecting elements (e.g., filters or gratings) and also the infrared sources and detectors are expensive.

As an illustration of prior art it is referred to VAN DEN BROEK W H A M ET AL.: "Identification of Plastics among Nonplastics in Mixed Waste by Remote Sensing Near-Infrared Imaging Spectroscopy. 1. Image Improvement and Analysis by Singular Value Decomposition" ANAL. CHEM., vol. 67, no. 20, 15 October 1995, pages 3753-3759, XP000541459 Washington, DC, US. The article discloses installation of a near-IR camera in an experimental setup for real-time plastic identification. Singular value decomposition (SVD) is used for qualitative analysis and substantial improvement of the measured multivariate images. Obtained score plots provide spatial correlations between different pixel structures caused by sample material on the one hand and image artifacts on the other. The score plots are used as a tool to optimize experimental setup and image quality. The improved images were offered to a new classification algorithm called multivariate image rank analysis, based on SVD. Filtering is done by using filters of a same material, although with different colours or wavelength pass bands.

As further illustration of the prior art in connection with, *inter alia,* the use of spectroscopy and infrared light, reference is made to US Patents 5512752, 4719351, 52065 10, German patent publications DE 19601923, 19543134 and 4340795, and the Japanese patent applications JP-A-9138194. 6288913 and 6210632.

A number of other methods and equipment for the detection of plastics have also been developed which are somewhat cheaper than spectroscopie methods and equipment, but
where the result of the detection is less reliable. Examples of such known equipment are the triboelectric detector and the optical double refraction detector.

Furthermore, the use of so-called correlation spectroscopy is known in connection with the measurement of gases, both for the detection of gases and concentration measurement. The gas to be analysed is used as a filter.

The object of the present invention is to use a similar technique for the detection of plastic materials. Absorption spectra of solid substances such as plastics are very different from the absorption spectra of gases. Whilst gases have very many, very fine lines in the spectrum, plastic materials have fewer and broader lines, so that as a rule the spectra of different materials have more or less overlapping lines. In such a situation, more information is obtained about the material to be identified by measuring the degree of spectral overlapping with a number of different plastic materials.

The method mentioned above is characterised, according to the invention, by
- letting the light rays from the radiation source successively pass through a plurality of filters, a first number of these filters each being elected from a group of wholly or partly transparent and different materials having mutually different spectral characteristics, at least one of the materials of said group being the same as the material to be identified;
- intercepting the light rays having passed through the filters and not having been absorbed by the article to form a sequence of measured values which represent characteristic transmission signatures of the article; and
- in a known manner currying out a correlation analysis of the signatures in relation to statistical models in order to determine the type of material of the article.

Similarly, the apparatus mentioned above is characterised by
- a device in the detector station provided with a plurality of filters, where a first number of these filters arc each elected from a group of wholly or partly transparent and different materials having mutually different spectral characteristics to effect successive and different nitration of the light rays from the radiation source, at least one of the materials in said group being the same as the material to be identified,
- a means arranged to intercept the light rays filtered by the filter and non-absorbed by the article in order to form a sequence of measured values representing characteristic transmission signatures of the article; and
- a processor which includes an analyser, e.g., a microprocessor, adapted to carry out in a known way a correlation analysis of the signatures in relation to statistical models in order to determine the material type of the article.

Here, statistical models should be understood to mean pre-established reference values, so-called calibration values which are related to signatures of certain types of material. Additional embodiments of the method and the apparatus are set forth in the attached patent claims and in the description below with reference to the attached drawings.

An advantageous application of the method and apparatus would be to use them in a reverse vending machine to identify and sort bottles of different material types.

The invention will now be described in more detail with reference to the attached drawings which show embodiments that do not define the limits of the invention.
Fig. 1 illustrates the principle of the apparatus according to an embodiment of the present invention. Fig. 2 is a perspective view of part of the apparatus shown in Fig. 1.
Fig. 3 shows a filter device for use with the apparatus according to an embodiment of the invention.
Fig. 4 is a top view of an alternative embodiment of a filter device and its location in a detector station.
Fig. 5 shows a measured light signal after preliminary treatment in order to give transmission signatures as a function of time for a number of different materials.
Fig. 6 shows in the form of a flow diagram the series of evaluations which a processor, according to an embodiment of the invention, must make.
Fig. 7 shows test result of the spectral transmission of selected filter materials, multiplied by the transmission of an envelope filter.
Fig. 8 shows average transmission curves for types of plastics which have been identified in a test installation.
Fig. 9 shows a modification of the filter device in Fig. 3.
Fig. 10 shows a modification of Fig. 5 by using the filter device of Fig. 9.

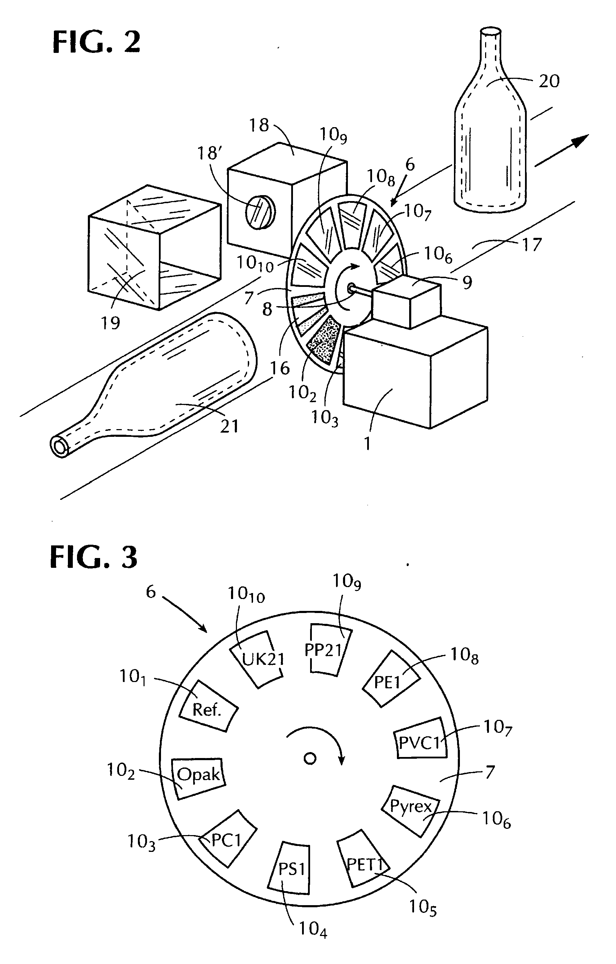

The apparatus according to an embodiment of the invention has a detector station, including an infrared radiation source 1 which has a hot element 2 that emits infrared rays 3, optionally via a mirror 4. The radiation source 1 has an illuminator aperture 5 and the infrared beam is guided towards a filter device 6, preferably consisting of a rotatable, round or polygonal disc 7 which via a rotation shaft 8 is caused to rotate by a motor 9 which via cable connection 12, 13 is supplied with electric drive current under the control of a microprocessor 11. The light filter device 6 is provided with a plurality of different light filters 10. In a preferred test version, as shown in Fig. 3, the chosen number of light filters is ten.

In order to provide a wavelength limitation, it would be advantageous to provide an envelope filter 14 between the illuminator aperture 5 of the radiation source 1 and the filter device 6. Furthermore, it is also advantageous to position a diaphragm 15 in the path of the light beam. The filters 10 provided on the filter device in the form of a wheel or a rotating disc consist at least in part of a number of light-transparent pieces of different types of plastic material, e.g., selected from the material group consisting of polyethylene terephthalate, polyethylene naphthalate, polyvinyl chloride, polypropylene, polyethylene, polystyrene, acrylonitrile-butadiene-styrene copolymer, polymethyl methacrylate, polyamide, polyurethane, polysulphonate and polycarbonate. In addition, at least one of the filters may optionally be of glass, e.g., Pyrex ® glass.

Although Fig. 1 shows the order of the envelope filter 14, the filter device 6 and the diaphragm 15 preferred at present, it should be appreciated that their position relative to one another may de different. Similarly, it is conceivable that one or more of these components may, e.g., be positioned on the opposite side of the conveyor 17. Furthermore, it is possible that, e.g., the diaphragm 15 and the envelope filter 14 may made in the form of a single unit, or that the filter device 6 and the diaphragm 15 may be combined into one unit.

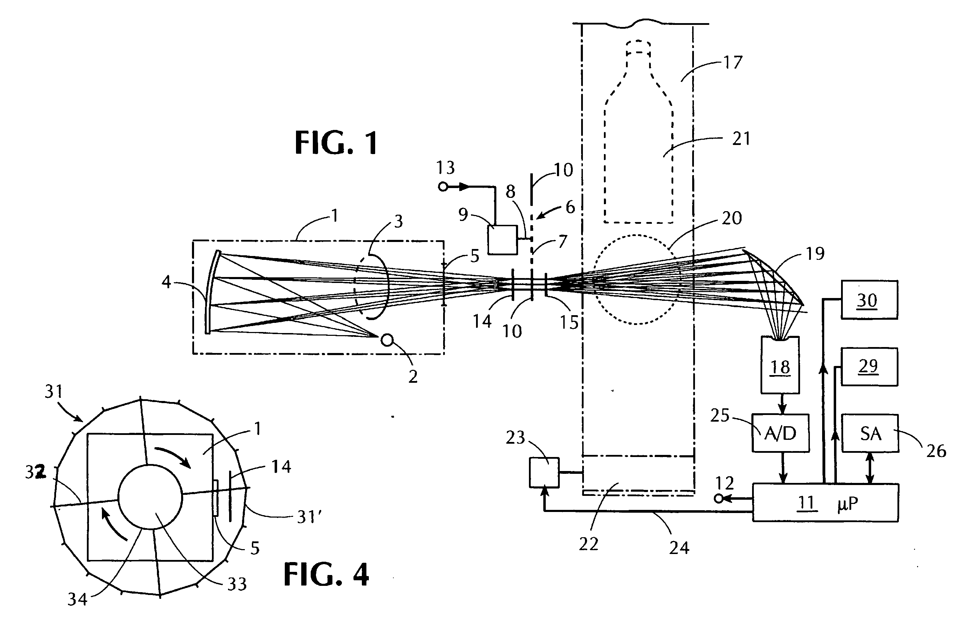

In Fig. 3 the filters 10 used in the filter device are indicated by the references 10ₙ and where in the chosen example n=1 ... 10. However, it will be appreciated that more or fewer filters are possible within the scope of the invention, as will also be referred to in connection with Fig. 4.

Of the filters shown in Fig. 3, the filter 10₁ forms a reference filter which preferably is made of a spectrally uniform or material-free diaphragm 16 (see Fig. 2). The filter 10₂ is of an opaque material, e.g., completely black, thus preventing the passage of light rays therethrough. Due to its area-limiting light ray penetrability through the diaphragm or aperture 16, the filter 10₁ produces a signal peak reference value in the sequences of measured values. The light ray impenetrability of the filter 10₂ will create a trough reference value in the sequence of measured values.

In the test installation, the other filters 10₃, 10₄, 10₅, 10₆, 10₇, 10₈, 10₉ and 10₁₀ were chosen from materials consisting respectively of polycarbonate (PC), polystyrene (PS), polyethylene terephthalate (PET), glass (Pyrex ® glass), polyvinyl chloride (PVC), polyethylene (PE), polypropylene (PP) and polyethylene with an applied film, here designated UK21. After the light rays have passed the diaphragm 15, they will, possibly somewhat more concentrated (collimated) than indicated in Fig. 1, pass over a conveyor 17 and then to a detector 18 with a lens 18', optionally via a focusing mirror 19.

In those cases where the article to be detected is a bottle, the bottle may either be transported in an upright position as indicated by means of the reference numeral 20, or in a horizontal position as indicated by means of the reference numeral 21. The conveyor 17 is driven via driving roller 22 from a motor 23, and the operation of the motor can be controlled from the microprocessor 11 via a control cable 24. If it is desirable to cause the article to be detected to stop in the detection zone or optionally to pass through at a reduced speed, this can be controlled from the microprocessor 11 via the output 24 to the motor 23. The conveyor 17 may be of any type. If the bottle is transported in a horizontal position, as indicated by means of the reference numeral 21, the conveyor may, for instance, consist of spaced continuous cords or wires.

The conveyor 17 may move either continuously or discontinuously. The conveyor may also conceivably be a rotating plate which is driven continuously or discontinuously.

It is also conceivable that the bottles could arrive at the detection zone (i.e., in the light beam 3) at such intervals that the bottle for a brief instant can be held motionless there. If the conveyor 17, for instance, is not a belt-based conveyor, but a tube or chute, the bottle could conceivably be held motionless for a brief instant in the detection zone, so that determination of the material type of the bottle may easily be made in that the light rays pass into the transport channel or chute through an opening therein and pass out through an opening on the other side of the chute.

By causing the filter device 6 with its disc 7 containing the filters 10 to rotate, the filters will in turn come into the light transmission path of the light rays 3. A sequence of signal pulses of varying intensity, one for each of the filters used, will thus be emitted from the detector 18. The signal intensity of the measured values in the sequence will be dependent upon the material type in the article under examination, and will moreover be highly characteristic for each type of material, especially when using plastic materials typical for the article.

Articles examined in this way will, together with the successive filters, bring about a sequence of characteristic transmission signatures for each individual article.

The present invention could advantageously be used for identifying a number of typical plastic materials, such as polyethylene terephthalate (PET), polyethylene naphthalate (PEN), polyvinyl chloride (PVC), polyethylene (PE), polypropylene (PP), polycarbonate (PC), polystyrene (PS), acrylonitrile-butadiene-styrene copolymer (ABS), polymethyl methacrylate (PMMA), polyamide (PA), polyurethane (PUR), polysulphonate (PSU) etc. The same materials as those which are to be identified are used as filter materials for the filters 10 (see the filters 10₃ - 10₁₀ in Fig. 3). The selectivity attainable will be further increased, the more filters and filter materials that are used. A filter device 6 such as that shown in Figs. 1, 2 and 3, will potentially be very inexpensive to manufacture, as the plastic materials used as filters are very inexpensive, and at the same time they allow the passage of radiation in a wide wavelength range. This makes total transmitted radiation high, which in turn allows use of detectors 18 of such types that are inexpensive, for example, pyroelectric detectors, thermoelectric detectors or uncooled photoconductors such as PbS and PbSe. It will be possible to optimise selectivity of the method and apparatus according to the invention by limiting the spectral range used to a wavelength range wherein the materials used have different characteristic spectral features or transmission signatures. A limitation of this kind may be made using band pass filters, and an example of such a filter is indicated by the reference numeral 14 in Fig. 1. The wavelength range may, e.g., extend from about 3 micrometers to about 4 micrometers, preferably from 2 to 2.5 micrometers or alternatively from about 1.6 to 1.8 micrometers.

Of course, other wavelength ranges are also conceivable in connection with possible other plastic materials which are to be detected.

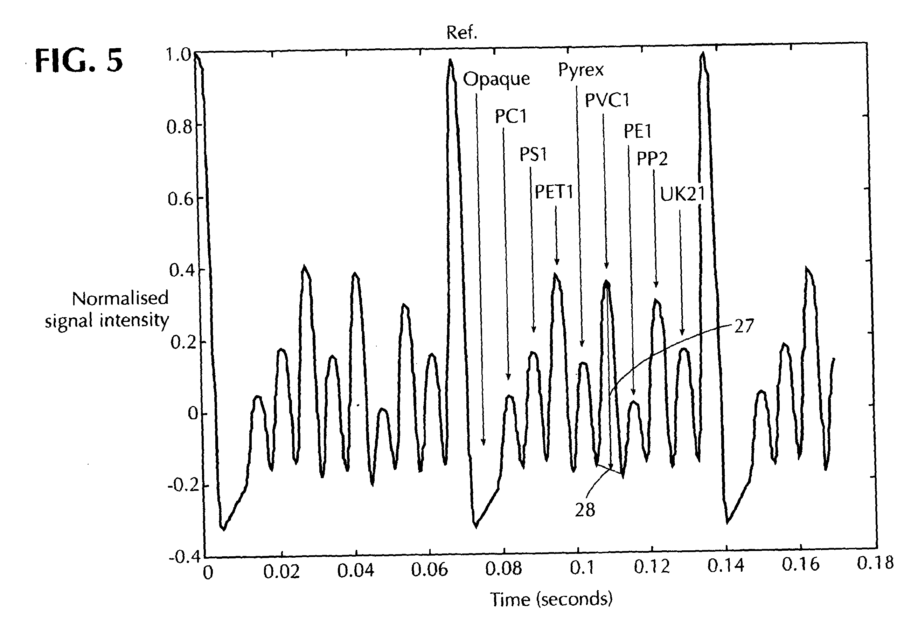

The repeated sequence of signal pulses emitted from the detector 18 can be seen from Fig. 5 as a typical example. These signal pulses are passed to an analog/digital converter 25, from where signals are passed to the microprocessor 11. As shown in Fig. 5, the reference filter 10₁ will provide a distinct reference pulse designated "Ref" on Fig. 5. The opaque filter material 10₂ will produce the signal valley which is indicated by the reference Opaque. The signal spectrum thus contains a reference signal peak caused by the area-limited, unfiltered light, and the reference signal trough that is due to a blocking of the light rays. The microprocessor 11 will analyse successively each of the other signal peaks in the sequence of measured values, e.g., the signal peak 27 (Fig. 5) relative to a mean value 28 of two adjacent signal valley.

On the basis of the measurements taken, it will be possible to compute a light transmission value for an article based on the level value 26 of a respective signal peak minus the said mean value. The said values may optionally be determined on the basis of a normalised signal intensity, as can also be seen from Fig. 5. As Fig. 5 shows, in a test installation, it was possible to carry out a scanning cycle in the course of about 70 milliseconds. The microprocessor 11 operates so that on the computation of the light transmission values it collects the sequence of the computed light transmission values from a signal cycle in a vector consisting of n elements, wherein n is equal to the number of filters, and compares this with corresponding measured values for a subsequent signal sequence or scanning sequence.

The microprocessor 11 is capable of computing the average value of two successive signal sequence values and deriving with the aid of a calibration or identification operation, e.g., PLS (Partial Least Squares) discriminant analysis, a unique characteristic of the material type of which the article is made. This calibration and identification operation includes use of a calibration and identification algorithm.

Although the design of the filter device shown and described in connection with Figs. 1-3 may be typically like that shown in Figs. 2 and 3, it is quite conceivable that the filters 10 arranged on the filter device 6 may be positioned closer together.

As an alternative, it is possible that the filter device may have the appearance of a drum-like structure, e.g., produced using extruded aluminium or plastic. The drum 31, in the proposed exemplary embodiment, may have a vertical or horizontal rotation shaft, depending upon the design and position of the radiation source 1. The drum 31 is supported by arms 32 which are secured to the rotation shaft 34 of the driving motor 33. The said filters can be placed in open sections 31' in the wall of the drum. By dividing the drum wall up as shown in Fig. 4, it will be possible to position a total of 16 filters. However, it will be appreciated immediately that it will be possible to position a larger or smaller number of filters on the drum, depending upon the number of filter openings that are provided. The drum may be circular in cross-section, or optionally have a polygonal cross-section.

It is also conceivable that the drum 31 may be positioned on the detector side of the conveyor 17, e.g., rotating about the detector 18 instead of about the radiation source 1.

The motor 33 which turns the drum 31 may, e.g., be a DC motor like the motor 9 in Fig. 1.

When an article, such as a bottle 20 or 21, is placed in the light path between the radiation source 1 and the detector 18, for each revolution of the filter device, an irradiation is carried out with n different spectral characteristics, depending upon the number of filters used. The transmitted radiation is measured continuously by the detector. A signal amplifier can be installed in the detector and through the analysis of the transmission values it will be possible to make a very reliable classification of the different types of plastic. In a rudimentary test of the present invention, when testing a limited number of articles, an accuracy of 80% was attained, whilst 16% could not be classified and 4% were incorrectly classified. However, it should be understood that a refining of the calibration or identification algorithm and the equipment used will increase the accuracy of the measurements.

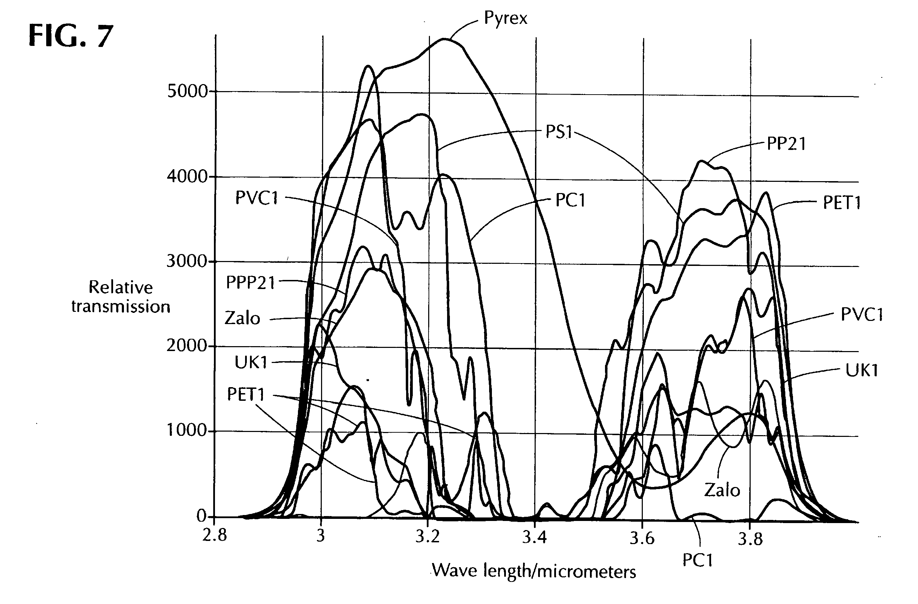

The filters used in the filter device 6 consist typically of bits of sectors of a circle. In addition to the various polymers, Pyrex ® glass was found to be suitable as a filter material. The spectral transmission of the filter materials multiplied by the transmission of the envelope filter 14 can be seen in more detail in Fig. 7. However, the filter materials shown in this figure must not be perceived as in any way defining the limits of the application of the invention.

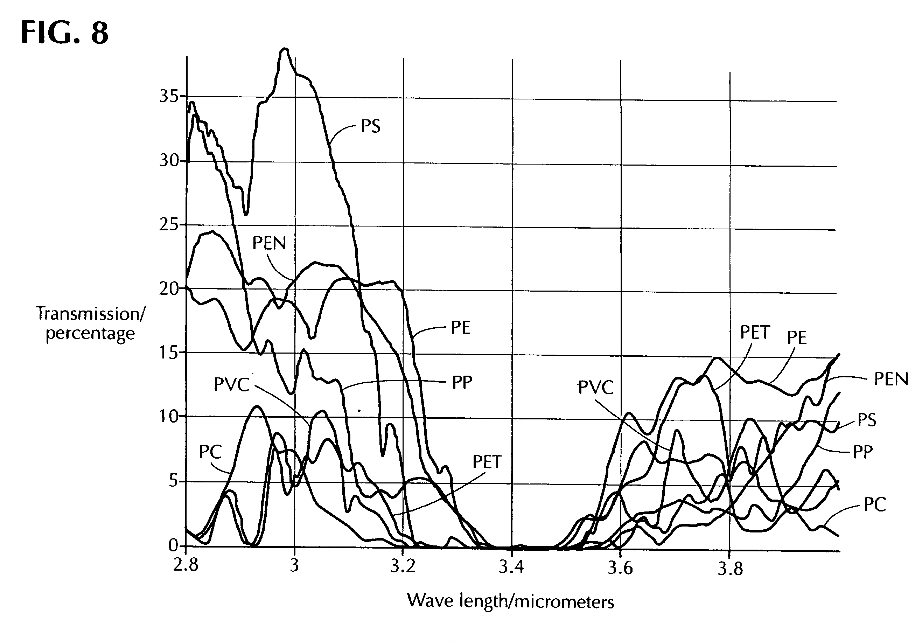

Fig. 8 shows the average transmission curves for each of the types of plastic in question which were identified during the preliminary tests.

According to a prototype and preferred embodiment of the invention, the envelope filter 14 limited the wavelength range to 2.9-3.8 micrometers. However, it will be appreciated that other wavelength ranges may conceivably be employed by using other filters. The diaphragm 15, which determines how much radiation is to pass through and be sent towards the article, will also ensure that light rays pass through from only one filter at a time. The diaphragm may have a fixed or variable diameter, and an appropriate diameter has been found to be 13 mm, although this must not be perceived as in any way defining the limits of the invention.

In Fig. 2, for the purposes of illustration, it is supposed that the radiation which strikes the article, such as a bottle 20 or 21, is not deflected therein. However, in practice, light rays will be refracted depending on the angle and where on the bottle they fall. However, some of the light rays which pass through the article will always strike the detector 18, optionally via the mirror 19.

In particular when detecting bottles, it would be advantageous to transport these in a horizontal position and concentrate the detection area on the bottle on its neck portion.

A simple amplifier with high and low pass filters may be built into or connected to the detector 18. In a test installation, the signal from the detector was given a sequence of about 170 Hz and thus periodically had a frequency of 170/10 equalling 17 Hz (because of the 10 filters in the filter device 6). For each measurement, 4-5 periods were sampled, whereupon a digital smoothing and normalising was carried out, the signal frequency was computed and the reference point (signal maximum) was localised. Fig. 5 shows the signal as it appeared subsequent to this process.

As previously indicated, the transmission values are computed as the level of the respective signal peak, minus the mean value of two "neighbouring troughs". The computed values are collected in a vector of 10 elements and are compared with corresponding values for a subsequent signal sequence. If the signal varies excessively, the measurement is rejected, but if the signal is acceptable, average values are computed and then passed on to the calibration and identification algorithms.

In Fig. 1 reference numeral 29 indicates peripheral equipment associated with the microprocessor 11, such as equipment for paying a return deposit for articles received, such as returned bottles, and for giving information to a person operating the apparatus if it is a part of a reverse vending machine. The reference numeral 30 indicates yet more peripheral equipment, such as after-treatment equipment in the form of, for instance, sorting devices, compactors, material cutters, additional conveyors etc.

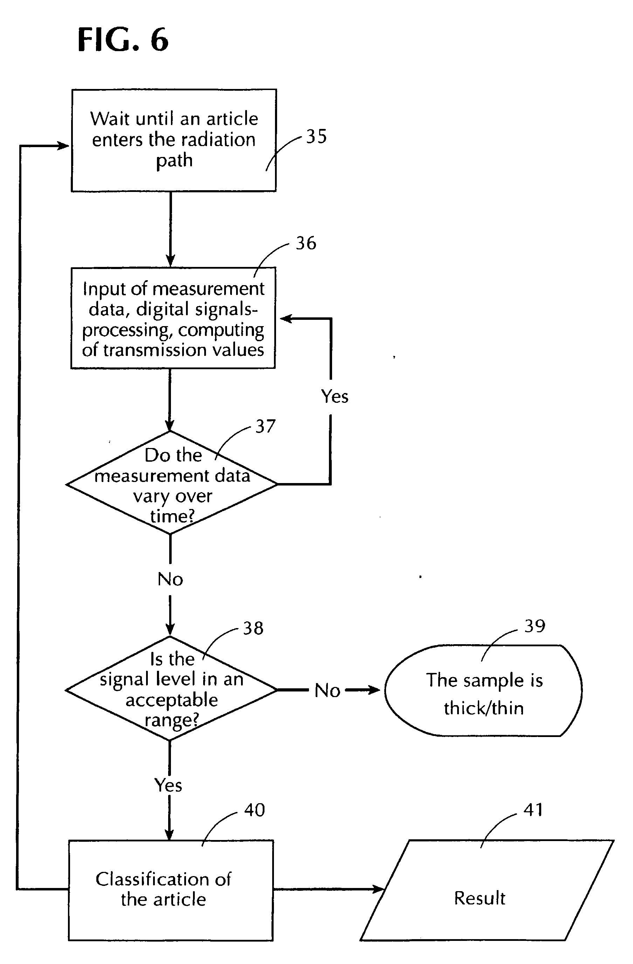

In Fig. 6, by way of a summary, the process steps which must be carried out to classify an article entering a detector station are indicated in general terms.

Block 35 indicates that the system is waiting for an article to enter the radiation path. When such an article is present, block 36 indicates that measurement data are fed into the detector 18 with subsequent digital signal processing in the A/D converter 25 and with computation of transmission values with the aid of the microprocessor 11. The decision block 37 indicates that the microprocessor 11 considers whether the sequence of the received and analysed measured values vary over time. If such is the case, measured values must be fed in and processed again. However, if such is not the case, a new decision will be taken as represented by block 38 with respect to whether the signal level is within an acceptable, predetermined range. If this is not the case, as indicated by block 39, e.g., that the article of which a measurement test is taken is too thick or too thin, the measurement will be rejected and the article deemed non-accepted. In such a case, it is possible, via the peripheral equipment as indicated in Fig. 1 by means of reference numeral 34, to convey the article received back to the person who has inserted it, or optionally to convey the article to a receptacle for unidentified articles.

However, if the signal level is in an acceptable range, the article will be classifiable, as indicated at block 40, thus allowing the article to be conveyed to the correct further treatment, whether this be compaction of the article or cutting it up, or to re-use of the article. This is generally indicated by reference numeral 41, which also includes the possibility, via the peripheral equipment 29, of printing out a receipt for the person who inserted the article showing the return deposit value, if any, of the article.

During the testing of a prototype of the apparatus according to an embodiment of the invention, the calibration was done by means of a method which is generally referred to as PLS discriminant analysis, wherein PLS in this connection stands for "Partial Least Squares", and is a method used in the calibration of instruments with many wavelength ranges, and wherein the individual wavelength ranges may be correlated. This type of analysis is well suited for distinguishing between two fractions. One of the fractions can be given a y value of +1, whilst the other fraction can be given a y value of -1, and the PLS analysis can then be used to find an optimal regression vector which distinguishes the two fractions under given conditions. In the case where, e.g., ten filters are used, as shown in Fig. 3, all the computation necessary to find out which fraction an unknown sample belongs to will be to multiply the regression vector by the sequence of measured values which are obtained as the ten filters pass by. In this specific instance, eight regression vectors are computed, wherein the first divides the multidimensional space in two. By examining the decomposition with the aid of an analysis procedure that is known per se, it is seen that PC, PEN and PET constitute one fraction, whilst PE, PP, PS and PVC constitute a second fraction of the typical wavelength range of 2.8-3.9 micrometers. After PC, PEN and PET have been separated as a fraction, a regression vector is computed which separates PEC, one which separates PEN and one which separates PET from this fraction. Similar methodology is used for the other types of plastics.

This method is simple per se and will give satisfactory results, but a drawback of PLS discriminant analysis is that it attempts to plot all articles of one type as the integer 1, whilst all other types are plotted as the integer -1. The regression vector used is therefore not quite optimal, even though the method of analysis is simple. Use of PLS discriminant analysis is therefore only named as a possible method of analysis. Other possible methods of analysis are, e.g., "Principal Component Analysis", direct correlation, Mahalonobis' discrimination, neural network analysis and "fuzzy" logic.

As mentioned above, an article which is to be detected is transported through the detector station in a continuous or discontinuous movement. The discontinuous movement may, e.g., mean that the article, when it comes into the path of the light beam 3, is made to stop briefly once or optionally several times with intervening small movements. If an article, e.g., a bottle, is furnished with large labels, it may be expedient to cause the article to rotate in the detector station until a maximum signal intensity through the reference filter, such as the filter 10' in Fig. 3, is registered. In such a case, it would be of advantage if the article, such as a bottle, were transported in a horizontal position, as indicated by the reference numeral 21, and that in the detector station there is equipment for rotating the article, in the form of peripheral equipment belonging to the block 33.

In a preferred execution of the invention, the neck of the bottle in particular will be suitable for material detection.

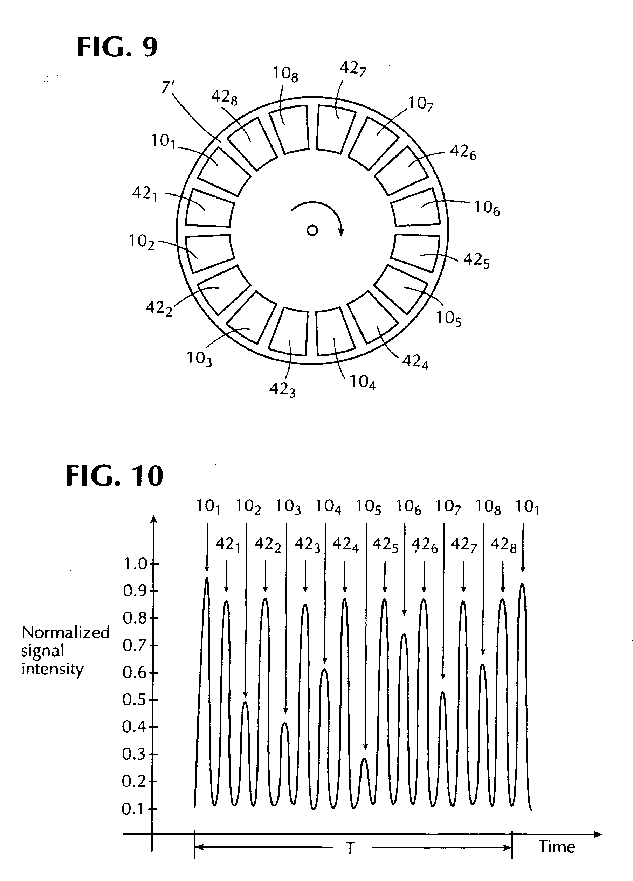

Fig. 9 shows a modification of the filter disc 7 which can be seen in Fig. 3. On this Fig. 8 shows a modification of the filter disc 7 which can be seen in Fig. 3. On this chosen version of the filter-carrying disc that does not define the limits of the invention, there is provided a total of eight filters 10, of which the filter 10₁ is a completely transparent reference filter which preferably, but not necessarily, is made of a diaphragmed but material-free (i.e., open) aperture 16 (see Fig. 2). The other filters 10₂, 10₃, 10₄, 10₅, 10₆, 10₇ and 10₈ could be selected from among, e.g., the following materials: polycarbonate (PC), polystyrene (PS), polyethylene terephthalate (PET), glass (Pyrex ® glass), polyvinyl chloride (PVC), polyethylene (PE), polypropylene (PP) and polyethylene. Between the adjacent filters 10₁, 10₂, 10₃, 10₄, 10₅, 10₆, 10₇ and 10₈ there are arranged respective filter-free diaphragms, or diaphragms of the same filter material in all, or diaphragms of limited light area, indicated by 42₁, 42₂, 42₃, 42₄, 42₅, 42₆, 42₇ and 42₈, respectively. The diaphragms or apertures 42 will help to produce measured reference values between the measured values of the spectral signatures in the sequence of measured values obtained when light rays successively pass through the filters 10. This will make the determination of such successive measured values more exact because there are always reference values on each side of the signature measured value.

If it is desirable to measure the rotation of the disc 7', the signal obtained via the filter 10₁ will produce a start reference (greater amplitude than that obtained via the apertures 42₁, 42₂, 42₃, 42₄, 42₅, 42₆, 42₇ and 42₈), whilst the diaphragms or apertures 42 will produce subsequent position indication for the subsequent signature measured values and also indicate the rate of rotation of the disc 7' (number of pulses from the diaphragms/apertures 42 per unit of time).

## Claims

1. A method for identifying a type of material in a physical article (20; 21), such as a wholly or partly transparent bottle of plastics or glass, the article in a continuous or discontinuous movement being caused to pass through a detector station (1-16. 18, 19, 25), by means of the detector station illuminating the article by light rays from an infrared radiation source (1), detecting light rays which non-absorbed have passed through the article, and thereafter carrying out a correlation analysis of such detected light rays,
**characterised by**
- letting the light rays from the radiation source (1) successively pass through a plurality of filters (10), a first number of these filters (10₃-10₁₀) each being elected from a group of wholly or partly transparent and different materials having mutually different spectral characteristics, at least one of the materials of said group being the same as the material to be identified;
- intercepting the light rays having passed through the filters (10) and not having been absorbed by the article (20; 21) to form a sequence of measured values which represent characteristic transmission signatures of the article; and
- in a known manner carrying out a correlation analysis of the signatures in relation to statistical models in order to determine the type of material of the article (20; 21).

2. The method according to claim 1, wherein at least one filter (10₁) in a second number of said plurality of filters (10) is configured as a diaphragmed, material-free aperture (16).

3. The method according to claim 2, wherein from said second number of said filters (10) there is chosen two of the filters (10₁, 10₂) to provide area-limited light ray penetrability through said diaphragm or aperture (16) to produce a signal peak reference value in the sequence of measured values, and light ray impenetrability to produce a valley reference value in the sequence of measured values, respectively.

4. The method according to any of claims 1, 2 or 3, wherein in the sequence of measured values there are produced reference measurement values which are adjacent to the respective signature measured values.

5. The method according to any of claims 1, 2, 3 or 4 , wherein there is provided in the sequence of measured values at least one reference signal peak caused by area-limited, material-unfiltered light, and analyzing successively each of other signal peaks (27) in the sequence of measured values in relation to a mean value (28) of two adjacent signal valleys.

6. The method according to any of claims 1, 2, 3, 4 or 5, wherein a wavelength limitation (14) is provided in the radiation path between the radiation source (1) and a detector (18) in the detector station (1-16, 18, 19, 25).

7. The method according to any of the preceding claims, wherein a partial diaphragming (15) of the light rays is provided in the radiation path between the radiation source (1) and a detector (18) in the detector station (1-16, 18, 19, 25)

8. The method according to any of the preceding claims, wherein the light rays passing through the article (20; 21) are deflected towards a detector (18) in the detector station (1-16, 18, 19, 25) by means of a focusing mirror (19).

9. The method according to claim 5, wherein in the sequence of measured values there is provided at least one reference signal valley (Opaque) caused by blocking the light rays; and wherein each other signal valley in the sequence of measured values is analyzed in order to form said mean value (28) of two adjacent signal values in relation to successive signal peaks (27).

10. The method according to claim 5 or 9, wherein a light transmission Value is computed for an article (20; 21) based on the level value (26) of a respective signal peak (27) minus said mean value (28).

11. The method according to claim 10, wherein the computed light transmission values from a signal cycle are collected in a vector consisting of n elements, n being the number of filters, and wherein a comparison is made with the corresponding values for a subsequent signal period.

12. The method according to claim 11, wherein an article measurement is rejected if the difference between two successive signal period values exceeds a threshold within an otherwise acceptable measurement sequence

13. The method according to claim 12, wherein the average value of two successive signal period values are computed, and wherein with the aid of a calibration and identification operation, e.g. Partial Least Squares discriminant analysis, there is derived a unique - characteristic of the material type of which the article (20; 21) is made.

14. The method according to claim 13, wherein the calibration and identification operation includes the use of a calibration and identification algorithm.

15. The method according to any of the preceding claims, wherein the filters (10) are caused to move along a circular path.

16. The method according to any of the preceding claims, wherein at least one of the filters (10₃ - 10₁₀) of the first number of filters is elected from a group of materials consisting of polyethylene terephthalate, polyethylene naphthalate, polyvinyl chloride, polypropylene, polyethylene, polystyrene, polycarbonate, acrylonitrile-butadiene-styrene copolymer, polymethyl methacrylate, polyamide, polyurethane, polysulphonate, and glass.

17. An apparatus for identifying a type of material in a physical article (20; 21), such as a wholly or partly transparent bottle of plastic or glass, comprising a detector station (1-16, 18, 19, 25), a conveyor (17), means (11) for controlling the conveyor to cause the article to move continuously or discontinuously and to pass through the detector station; an infrared radiation source (1) for irradiating the article with light rays, means for detecting light rays which have passed through the article non-absorbed, and means for thereafter carrying out a correlation analysis of such detected light rays, **characterised by**
- a device (6) in the detector station provided with a plurality of filters (10), where a first number of these filters are each elected from a group of wholly or partly transparent and different materials having mutually different spectral characteristics to effect successive and different filtration of the light rays from the radiation source (1), at least one of the materials in said group being the same as the material to be identified,
- a means arranged to intercept the light rays filtered by the filter and non-absorbed by the article (20; 21) in order to form a sequence of measured values representing characteristic transmission signatures of the article; and
- a processor (11) which includes an analyser, e.g., a microprocessor, adapted to carry out in a known way a correlation analysis of the signatures in relation to statistical models in order to determine the material type of the article (20; 21).

18. The apparatus according to claim 17, wherein at least one filter (10₁) among a second number of said plurality of filters (10) is configured as a diaphragmed, but material-free aperture (16).

19. The apparatus according to claim 18, wherein among said second number of said filters (10) two of the filters (10₁, 10₂) have area-limited penetrability for said light rays through said diaphragm or said aperture (16) in order to create a signal peak reference value in the sequence of measured values, and light ray impenetrability to produce a valley reference value in the sequence of measured values.

20. The apparatus according to any of claims 17, 18 or 19, wherein the filters (10) are arranged on a rotary, round or polygonal disc (7) in order to move in a circular path.

21. The apparatus according to claim 17, wherein the detector station (1-16,18,19,25) comprises a detector (18) and wherein the filters are arranged in the wall of a drum (31) which is rotatable about an IR radiation source or said detector (18) in the detector station (1-16, 18, 19, 25), and that the drum (31) has a circular or polygonal cross-section.

22. The apparatus according to any of claims 17, 20 or 21, wherein there is arranged between adjacent filters (10) a diaphragmed aperture or an aperture with a light transparent material which is uniform for all of the apertures.

23. An apparatus according to any of claims 17-22, wherein the detector station (1-16, 18, 19, 25) comprises a detector (18) and wherein a wavelength limiting envelope filter (14) is provided in the radiation path between the radiation source (1) and a detector (18) in the detector station (1-16, 18, 19, 25).

24. An apparatus according to any of claims 17-23, wherein a diaphragm (15) is arranged in the path of the light beam.

25. An apparatus according to any of claims 17-24, wherein the detector station (1-16, 18, 19, 25) comprises a detector (18) and wherein in association with a detector (18) in the detector station (1-16, 18, 19, 25) there is provided a focusing mirror for guiding the light rays which pass through the article (20; 21) to said detector (18) in the detector station (1-16, 18, 19. 25).

26. An apparatus according to any of claims 17, 18 or 19, wherein the detector station (1-16, 18, 19, 25) comprises a detector (18) and wherein the processor (11) is adapted to register at least one reference signal peak in the sequence of signature measured values from said detector (18) in the detector station (1-16, 18, 19, 25) caused by unfiltered light.

27. An apparatus according to claim 26, **characterised in that** the processor (11) is also adapted to register at least one reference signal valley (Opaque) in the sequence of measured values of signals caused by blocking the light rays, and that the processor (11) also has an analyser for successively analysing each of other signal peaks (27) in the sequence of measured values in relation to a mean value (28) of two adjacent signal valleys.

28. An apparatus according to claim 27, wherein the processor (11) is adapted to compute the light transmission signature for an article (20; 21) based on the level value (26) of a respective signal peak (27) minus said mean value (28).

29. An apparatus according to claim 17 or 26, wherein the processor (11) is adapted to compute the transmission signature value for an article based on the level of a respective signal peak (27) in relation to the value of an adjacent reference signal peak.

30. An apparatus according to any of claims 17, 26, 27, 28 or 29, **characterised in that** the processor (11) is adapted to collect the computed transmission signature measured values from a sequence of measured values in a vector consisting of n elements, wherein n is equal to the number of filters (10), and compare with corresponding values for a subsequent signal period.

31. An apparatus according to any of claims 17, 23-30, wherein the processor (11) is adapted to reject an article measurement if the difference between two successive signal sequence measured values exceeds a threshold.

32. An apparatus according to any of claims 17 and 23 - 26, wherein the processor (11) is adapted to compute the average value of two successive signal sequence measured values, and carry out an analysis with the aid of a calibration and identification operation, e.g., Partial Least Squares discriminant analysis, in order to give a unique characteristic of the material type of which the article (20; 21) is made.

33. An apparatus according to any of claims 17 - 32, wherein at least one of the filters (10₃ - 10₁₀) among the first number of filters is selected from a group of materials consisting of polyethylene terephthalate, polyethylene naphthalate, polyvinyl chloride, polypropylene, polyethylene, polystyrene, acrylonitrile-butadiene-styrene copolymer, polymethyl methacrylate, polyamide, polyurethane, polysulphonate polycarbonate and glass.

34. An apparatus according to any of claims 17 - 33, wherein the apparatus is included in a reverse vending machine for identification and sorting of bottles (20; 21) of different material types.

## Patentansprüche

1. Verfahren zur Bestimmung einer Materialart in einem physischen Artikel (20; 21) wie beispielsweise einer ganz oder teilweise durchsichtigen Flasche aus Plastik oder Glas, wobei ein Durchlaufen des Artikels in einer stetigen oder unstetigen Bewegung durch eine Detektorstation (1-16, 18, 19, 25) bewirkt wird, der Artikel mittels der Detektorstation mit Lichtstrahlen aus einer Infrarot-Strahlungsquelle (1) beleuchtet wird, Lichtstrahlen erfasst werden, die nicht absorbiert durch den Artikel hindurchgetreten sind, und dann eine Korrelationsanalyse dieser erfassten Lichtstrahlen durchgeführt wird,
**dadurch gekennzeichnet, dass**
- die Lichtstrahlen der Strahlungsquelle (1) nacheinander durch eine Mehrzahl von Filtern (10) durchgelassen werden, wobei eine erste Anzahl dieser Filter (10₃ - 10₁₀) jeweils aus einer Gruppe ganz oder teilweise transparenter und unterschiedlicher Materialien mit gegenseitig verschiedenen Spektraleigenschaften ausgewählt ist und mindestens eines der Materialien der Gruppe das gleiche Material wie das zu bestimmende Material ist;
- die durch die Filter (10) hindurchgetretenen und von dem Artikel (20; 21) nicht absorbierten Lichtstrahlen aufgefangen werden, um eine Reihe von Messwerten zu bilden, die charakteristische Transmissionssignaturen des Artikels darstellen; und
- auf bekannte Weise eine Korrelationsanalyse der Signaturen in Bezug auf statistische Modelle durchgeführt wird, um die Materialart des Artikels (20; 21) zu bestimmen.

2. Verfahren nach Anspruch 1, wobei mindestens ein Filter (10₁) einer zweiten Anzahl der Mehrzahl von Filtern (10) als abgeblendete, materialfreie Öffnung (16) ausgebildet ist.

3. Verfahren nach Anspruch 2, wobei aus der zweiten Anzahl der Filter (10) zwei Filter (10₁, 10₂) ausgewählt sind, um auf einer begrenzten Fläche eine Durchlässigkeit für Lichtstrahlen durch die Blende oder Öffnung (16) zum Erzeugen eines Signalspitzen-Bezugswerts in der Messwertreihe, bzw. eine Undurchlässigkeit für Lichtstrahlen zum Erzeugen eines Tal-Bezugswerts in der Messwertreihe zu bewirken.

4. Verfahren nach einem der Ansprüche 1, 2 oder 3, wobei in der Messwertreihe Bezugsmesswerte erzeugt werden, die jeweils neben den Signatur-Messwerten liegen.

5. Verfahren nach einem der Ansprüche 1, 2, 3 oder 4, wobei in der Messwertreihe mindestens eine durch flächenbegrenztes, nicht durch Material gefiltertes Licht verursachte Bezugs-Signalspitze erzeugt wird und nacheinander jede der anderen Signalspitzen (27) in der Messwertreihe in Bezug auf einen Mittelwert (28) zweier nebeneinanderliegender Signaltäler analysiert wird.

6. Verfahren nach einem der Ansprüche 1, 2, 3, 4 oder 5, wobei im Strahlengang zwischen der Strahlungsquelle (1) und einem Detektor (18) in der Detektorstation (1-16, 18, 19, 25) eine Wellenlängenbegrenzung (14) vorgesehen ist.

7. Verfahren nach einem der vorstehenden Ansprüche, wobei im Strahlengang zwischen der Strahlungsquelle (1) und einem Detektor (18) in der Detektorstation (1-16, 18, 19, 25) eine teilweise Abblendung (15) der Lichtstrahlen vorgesehen ist.

8. Verfahren nach einem der vorstehenden Ansprüche, wobei die durch den Artikel (20; 21) hindurchtretenden Lichtstrahlen mittels eines Fokussierungsspiegels (19) auf einen Detektor (18) in der Detektorstation (1-16, 18, 19, 25) umgelenkt werden.

9. Verfahren nach Anspruch 5, wobei in der Messwertreihe mindestens ein Bezugs-Signaltal (Opak) durch Blockieren der Lichtstrahlen erzeugt wird; und wobei jedes andere Signaltal in der Messwertreihe analysiert wird, um den Mittelwert (28) zweier nebeneinanderliegender Signalwerte in Bezug auf aufeinanderfolgende Signalspitzen (27) zu bilden.

10. Verfahren nach Anspruch 5 oder 9, wobei anhand des Pegelwerts (26) einer jeweiligen Signalspitze (27) abzüglich des Mittelwerts (28) ein Lichttransmissionswert für einen Artikel (20; 21) berechnet wird.

11. Verfahren nach Anspruch 10, wobei die berechneten Lichttransmissionswerte eines Signalzyklus in einem Vektor bestehend aus n Elementen zusammengefasst werden, wobei n die Anzahl Filter ist, und wobei ein Vergleich mit den entsprechenden Werten für eine nachfolgende Signalperiode durchgeführt wird.

12. Verfahren nach Anspruch 11, wobei eine Artikelmessung verworfen wird, wenn die Differenz zwischen zwei aufeinanderfolgenden Signalperiodenwerten innerhalb einer ansonsten annehmbaren Messreihe einen Grenzwert überschreitet.

13. Verfahren nach Anspruch 12, wobei der Durchschnittswert zweier aufeinanderfolgender Signalperiodenwerte berechnet wird, und wobei mit Hilfe eines Kalibrierungs- und Bestimmungsvorgangs, beispielsweise einer partiellen Kleinste-Quadrate Diskriminanzanalyse, eine eindeutige Charakteristik der Materialart abgeleitet wird, aus der der Artikel (20; 21) besteht.

14. Verfahren nach Anspruch 13, wobei der Kalibrierungs- und Bestimmungsvorgang die Verwendung eines Kalibrierungs- und Bestimmungsalgorithmus beinhaltet.

15. Verfahren nach einem der vorstehenden Ansprüche, wobei die Filter (10) entlang einer Kreisbahn bewegt werden.

16. Verfahren nach einem der vorstehenden Ansprüche, worin mindestens einer der Filter (10₃ - 10₁₀) der ersten Anzahl von Filtern aus einer Gruppe von Materialien bestehend aus Polyethylenterephthalat, Polyethylennaphthalat, Polyvinylchlorid, Polypropylen, Polyethylen, Polystyrol, Polycarbonat, Acrylonitril-Butadien-Styren-Copolymer, Polymethylmethacrylat, Polyamid, Polyurethan, Polysulfonat und Glas ausgewählt ist.

17. Apparat zur Bestimmung einer Materialart in einem physischen Artikel (20; 21) wie beispielsweise einer ganz oder teilweise durchsichtigen Flasche aus Plastik oder Glas, mit einer Detektorstation (1-16, 18, 19, 25), einem Förderband (17), Mitteln (11) zur Steuerung des Förderbands, um ein stetiges oder unstetiges Bewegen und Durchlaufen des Artikels durch die Detektorstation zu bewirken;
einer Infrarot-Strahlungsquelle (1) zum Beleuchten des Artikels mit Lichtstrahlen, Mitteln zur Erfassung von Lichtstrahlen, die nicht absorbiert durch den Artikel hindurchgetreten sind und Mitteln zur nachfolgenden Durchführung einer Korrelationsanalyse dieser erfassten Lichtstrahlen,
**gekennzeichnet durch**
- eine Vorrichtung (6) in der Detektorstation, die eine Mehrzahl von Filtern (10) aufweist, wobei eine erste Anzahl dieser Filter jeweils aus einer Gruppe ganz oder teilweise transparenter und unterschiedlicher Materialien mit gegenseitig verschiedenen Spektraleigenschaften ausgewählt ist, um aufeinanderfolgende und unterschiedliche Filterungen der Lichtstrahlen von der Strahlungsquelle (1) zu bewirken, und mindestens eines der Materialien der Gruppe das gleiche Material wie das zu bestimmende Material ist;
- ein Mittel zum Auffangen der **durch** den Filter gefilterten und vom Artikel (20; 21) nicht absorbierten Lichtstrahlen, um eine Reihe von Messwerten zu bilden, die charakteristische Transmissionssignaturen des Artikels darstellen; und
- einen Prozessor (11), der eine Analyseeinheit umfasst, beispielsweise einen Mikroprozessor, der auf bekannte Weise eine Korrelationsanalyse der Signaturen in Bezug auf statistische Modelle durchzuführen gestattet, um die Materialart des Artikels (20; 21) zu bestimmen.

18. Apparat nach Anspruch 17, wobei mindestens ein Filter (10₁) einer zweiten Anzahl der Mehrzahl von Filtern (10) als abgeblendete, jedoch materialfreie Öffnung (16) ausgebildet ist.

19. Apparat nach Anspruch 18, wobei unter der genannten zweiten Anzahl von Filtern (10) zwei Filter (10₁, 10₂) auf einer begrenzten Fläche eine Durchlässigkeit für die genannten Lichtstrahlen durch die genannte Blende oder Öffnung (16) zum Erzeugen eines Signalspitzen-Bezugswerts in der Reihe von Messwerten, und eine Undurchlässigkeit für Lichtstrahlen zum Erzeugen eines Tal-Bezugswerts in der Messwertreihe aufweisen.

20. Apparat nach einem der Ansprüche 17, 18 oder 19, wobei die Filter (10) auf einer drehbaren runden oder mehreckigen Scheibe (7) angeordnet sind, um sich auf einer Kreisbahn zu bewegen.

21. Apparat nach Anspruch 17, wobei die Detektorstation (1-16, 18, 19, 25) einen Detektor (18) aufweist, und wobei die Filter in der Wand einer Trommel (31) angeordnet sind, die um eine IR-Strahlungsquelle oder den genannten Detektor (18) in der Detektorstation (1-16, 18, 19, 25) drehbar ist, und dass die Trommel (31) einen runden oder mehreckigen Querschnitt aufweist.

22. Apparat nach einem der Ansprüche 17, 20 oder 21, wobei zwischen nebeneinanderliegenden Filtern (10) eine abgeblendete Öffnung oder eine Öffnung mit einem lichtdurchlässigen Material angeordnet ist, das für alle Öffnungen einheitlich ist.

23. Apparat nach einem der Ansprüche 17-22, wobei die Detektorstation (1-16, 18, 19, 25) einen Detektor (18) aufweist, und wobei im Strahlengang zwischen der Strahlungsquelle (1) und einem Detektor (18) in der Detektorstation (1-16, 18, 19, 25) ein wellenlängenbegrenzender Kantenfilter (14) vorgesehen ist.

24. Apparat nach einem der Ansprüche 17-23, worin im Weg des Lichtstrahls eine Blende (15) angeordnet ist.

25. Apparat nach einem der Ansprüche 17-24, wobei die Detektorstation (1-16, 18, 19, 25) einen Detektor (18) aufweist, und wobei in Verbindung mit einem Detektor (18) in der Detektorstation (1-16, 18, 19, 25) ein Fokussierungsspiegel vorgesehen ist, um die durch den Artikel (20; 21) hindurchtretenden Lichtstrahlen zum genannten Detektor (18) in der Detektorstation (1-16, 18, 19, 25) zu leiten.

26. Apparat nach einem der Ansprüche 17, 18 oder 19, wobei die Detektorstation (1-16, 18, 19, 25) einen Detektor (18) aufweist, und wobei der Prozessor (11) in der Lage ist, mindestens eine durch ungefiltertes Licht verursachte Bezugs-Signalspitze in der Signatur-Messwertreihe des genannten Detektors (18) in der Detektorstation (1-16, 18, 19, 25) zu registrieren.

27. Apparat nach Anspruch 26, **dadurch gekennzeichnet, dass** der Prozessor (11) ebenfalls in der Lage ist, mindestens ein durch Blockieren der Lichtstrahlen verursachtes Bezugs-Signaltal (Opak) in der Signal-Messwertreihe zu registrieren, und dass der Prozessor (11) zudem eine Analyseeinheit aufweist, um nacheinander jede der anderen Signalspitzen (27) in der Messwertreihe in Bezug auf einen Mittelwert (28) zweier nebeneinanderliegender Signaltäler zu analysieren.

28. Apparat nach Anspruch 27, wobei der Prozessor (11) in der Lage ist, anhand des Pegelwerts (26) einer jeweiligen Signalspitze (27) abzüglich des Mittelwerts (28) die Lichttransmissionssignatur für einen Artikel (20; 21) zu berechnen.

29. Apparat nach Anspruch 17 oder 26, wobei der Prozessor (11) in der Lage ist, den Transmissionssignaturwert für einen Artikel anhand des Pegels einer jeweiligen Signalspitze (27) in Bezug auf den Wert einer benachbarten Bezugs-Signalspitze zu berechnen.

30. Apparat nach einem der Ansprüche 17, 26, 27, 28 oder 29, **dadurch gekennzeichnet, dass** der Prozessor (11) in der Lage ist, die berechneten Transmissionssignatur-Messwerte einer Messwertreihe in einem Vektor bestehend aus n Elementen zusammenzufassen, wobei n gleich der Anzahl Filter 10 ist, und mit entsprechenden Werten für eine nachfolgende Signalperiode zu vergleichen.

31. Apparat nach einem der Ansprüche 17, 23-30, wobei der Prozessor (11) in der Lage ist, eine Artikelmessung zu verwerfen, wenn die Differenz zwischen den Messwerten zweier aufeinanderfolgender Signalreihen einen Grenzwert überschreitet.

32. Apparat nach einem der Ansprüche 17 und 23 - 26, wobei der Prozessor (11) in der Lage ist, den Durchschnittswert der Messwerte zweier aufeinanderfolgender Signalreihen zu berechnen und mit Hilfe eines Kalibrierungs- und Bestimmungsvorgangs, beispielsweise einer partiellen Kleinste-Quadrate Diskriminanzanalyse, eine Analyse durchzuführen, um eine eindeutige Charakteristik der Materialart zu ergeben, aus der der Artikel (20; 21) besteht.

33. Apparat nach einem der Ansprüche 17 - 32, wobei mindestens einer der Filter (10₃ - 10₁₀) der ersten Anzahl von Filtern aus einer Gruppe von Materialien bestehend aus Polyethylenterephthalat, Polyethylennaphthalat, Polyvinylchlorid, Polypropylen, Polyethylen, Polystyrol, Acrylonitril-Butadien-Styren-Copolymer, Polymethylmethacrylat, Polyamid, Polyurethan, Polysulfonat, Polycarbonat und Glas ausgewählt ist.

34. Apparat nach einem der Ansprüche 17 - 33, wobei der Apparat in einem Rücknahmeautomaten zur Erkennung und zum Sortieren von Flaschen (20; 21) aus unterschiedlichen Materialarten eingebaut ist.

## Revendications

1. Procédé d'identification d'un type de matériau dans un article physique (20; 21) tel qu'une bouteille entièrement ou partiellement transparente en plastique ou en verre, où l'article est amené, dans un mouvement continu ou discontinu, à travers une station de détection (1-16, 18, 19, 25), l'article est illuminé au moyen de la station de détection avec des rayons lumineux provenant d'une source de rayonnement (1) infrarouge, des rayons lumineux sont détectés qui ont passé par l'article sans avoir été absorbés, et ensuite une analyse de corrélation de ces rayons lumineux détectés est effectuée,
**caractérisé en ce que**
- les rayons lumineux provenant de la source de rayonnement (1) sont successivement conduits à travers une pluralité de filtres (10), un premier nombre de ces filtres (10₃ - 10₁₀) étant choisis chacun parmi un groupe de matériaux entièrement ou partiellement transparents et différents ayant des caractéristiques spectrales mutuellement différentes, l'un au moins des matériaux dudit groupe étant le même que le matériau à identifier;
- les rayons lumineux ayant passé par les filtres (10) et n'ayant pas été absorbés par l'article (20; 21) sont interceptés afin de former une séquence de valeurs mesurées qui représentent des signatures de transmission caractéristiques de l'article; et
- d'une manière connue, une analyse de corrélation des signatures par rapport à des modèles statistiques est effectuée afin de déterminer le type de matériau de l'article (20; 21).

2. Procédé selon la revendication 1, où au moins un filtre (10₁) parmi un deuxième nombre de ladite pluralité de filtres (10) présente la forme d'une ouverture (16) diaphragmée exempte de matière.

3. Procédé selon la revendication 2, où parmi ledit nombre desdits filtres (10) sont choisis deux filtres (10₁, 10₂) afin de créer sur une superficie limitée une pénétrabilité aux rayons lumineux à travers ledit diaphragme ou ladite ouverture (16) pour produire une valeur de référence pointe de signal dans la séquence de valeurs mesurées et une impénétrabilité aux rayons lumineux pour produire une valeur de référence de creux dans la séquence de valeurs mesurées, respectivement.

4. Procédé selon l'une quelconque des revendications 1, 2 ou 3, où dans la séquence de valeurs mesurées sont produites des valeurs mesurées de référence qui sont adjacentes aux valeurs mesurées respectives des signatures.

5. Procédé selon l'une quelconque des revendications 1, 2, 3 ou 4, où dans la séquence de valeurs mesurées est pourvue au moins une pointe référence du signal, engendrée par de la lumière à superficie limitée et non filtrée par de la matière, et chacune des autres pointes (27) du signal dans la séquence de valeurs mesurées est successivement analysée par rapport à une valeur moyenne (28) de deux creux adjacents du signal.

6. Procédé selon l'une quelconque des revendications 1, 2, 3, 4 ou 5, où une limitation (14) de la longueur d'onde est pourvue dans le trajet du rayonnement entre la source de rayonnement (1) et un détecteur (18) dans la station de détection (1-16, 18, 19, 25).

7. Procédé selon l'une quelconque des revendications précédentes, où une diaphragmation (15) partielle des rayons lumineux est pourvue dans le trajet du rayonnement entre la source de rayonnement (1) et un détecteur (18) dans la station de détection (1-16, 18, 19, 25).

8. Procédé selon l'une quelconque des revendications précédentes, où les rayons lumineux passant à travers l'article (20; 21) sont déviés sur un détecteur (18) dans la station de détection (1-16, 18, 19, 25) au moyen d'un miroir de focalisation (19).

9. Procédé selon la revendication 5, où dans la séquence de valeurs mesurées est pourvu au moins un creux référence du signal (Opaque) engendré en bloquant les rayons lumineux; et où chacun des autres creux du signal dans la séquence de valeurs mesurées est analysé afin de former ladite valeur moyenne (28) de deux valeurs adjacentes du signal par rapport à des pointes (27) successives du signal.

10. Procédé selon la revendication 5 ou 9, où une valeur de transmission lumineuse est calculée pour un article (20; 21) sur la base de la valeur (26) du niveau d'une pointe (27) respective du signal moins ladite valeur moyenne (28).

11. Procédé selon la revendication 10, où les valeurs de transmission lumineuse calculées d'un cycle de signaux sont réunis dans un vecteur comprenant n éléments, n étant le nombre de filtres, et où une comparaison aux valeurs correspondantes pour une période subséquente de signaux est faite.

12. Procédé selon la revendication 11, où une mesure d'article est rejetée si la différence entre deux valeurs de périodes successives de signaux dépasse un seuil dans une séquence de mesures autrement acceptable.

13. Procédé selon la revendication 12, où la valeur moyenne de deux valeurs de périodes successives de signaux est calculée, et où, à l'aide d'une opération de calibrage et d'identification telle que l'analyse discriminante par la méthode des moindres carrés partiels, est dérivée une caractéristique unique du type de matériau duquel l'article (20; 21) est constitué.

14. Procédé selon la revendication 13, où l'opération de calibrage et d'identification comprend l'utilisation d'un algorithme de calibrage et d'identification.

15. Procédé selon l'une quelconque des revendications précédentes, où les filtres (10) sont déplacés le long d'un chemin circulaire.

16. Procédé selon l'une quelconque des revendications précédentes, où l'un au moins des filtres (10₃ - 10₁₀) du premier nombre de filtres est choisi parmi un groupe de matériaux comprenant le polyéthylène téréphthalate, polyéthylène naphthalate, polychlorure de vinyle, polypropylène, polyéthylène, polystyrène, polycarbonate, copolymère acrylonitrile-butadiène-styrène, méthacrylate de polyméthyl, polyamide, polyuréthanne, polysulfonate et le verre.

17. Appareil d'identification d'un type de matériau dans un article physique (20; 21) tel qu'une bouteille entièrement ou partiellement transparente en plastique ou en verre, comprenant une station de détection (1-16, 18, 19, 25), un convoyeur (17), des moyens (11) pour commander le convoyeur afin de transmettre à l'article un mouvement continu ou discontinu et l'amener à travers la station de détection;
une source de rayonnement (1) infrarouge pour irradier l'article avec des rayons lumineux, des moyens pour détecter des rayons lumineux qui ont passé par l'article non absorbés et des moyens pour effectuer ensuite une analyse de corrélation de ces rayons lumineux détectés,
**caractérisé par**
- un dispositif (6) dans la station de détection qui est muni d'une pluralité de filtres (10), où un premier nombre de ces filtres sont choisis chacun parmi un groupe de matériaux entièrement ou partiellement transparents et différents ayant des caractéristiques spectrales mutuellement différentes afin d'effectuer des filtrages successifs et différents des rayons lumineux provenant de la source de rayonnement (1), l'un au moins des matériaux dans ledit groupe étant le même que le matériau à identifier;
- un moyen agencé de manière à intercepter les rayons lumineux filtrés par le filtre et non absorbés par l'article (20; 21), afin de former une séquence de valeurs mesurées représentant des signatures de transmission caractéristiques de l'article;
- un processeur (11) qui comprend un analyseur, p.ex. un microprocesseur, adapté à effectuer d'une manière connue une analyse de corrélation des signatures par rapport à des modèles statistiques afin de déterminer le type de matériau de l'article (20; 21).

18. Appareil selon la revendication 17, où au moins un filtre (10₁) parmi un deuxième nombre de ladite pluralité de filtres (10) présente la forme d'une ouverture (16) diaphragmée mais exempte de matière.

19. Appareil selon la revendication 18, où parmi ledit deuxième nombre desdits filtres (10), deux filtres (10₁, 10₂) ont sur une superficie limitée une pénétrabilité auxdits rayons lumineux à travers ledit diaphragme ou ladite ouverture (16) afin de créer une valeur de référence pointe de signal dans la séquence de valeurs mesurées, et une impénétrabilité pour produire une valeur de référence creux dans la séquence de valeurs mesurées.

20. Appareil selon l'une quelconque des revendications 17, 18 ou 19, où les filtres (10) sont agencés sur un disque (7) rotatif rond ou polygonal afin de se déplacer sur un parcours circulaire.

21. Appareil selon la revendication 17, où la station de détection (1-16, 18, 19, 25) comprend un détecteur (18), et où les filtres sont agencés dans la paroi d'un tambour (31) rotatif autour d'une source de rayonnement IR ou dudit détecteur (18) dans la station de détection (1-16, 18, 19, 25), et que le tambour (31) présente une coupe transversale circulaire ou polygonale.

22. Appareil selon l'une quelconque des revendications 17, 20 ou 21, où entre filtres (10) adjacents est agencée un ouverture diaphragmée ou une ouverture munie d'un matériau transparent à la lumière qui est uniforme pour toutes les ouvertures.

23. Appareil selon l'une quelconque des revendications 17-22, où la station de détection (1-16, 18, 19, 25) comprend un détecteur (18), et où un filtre enveloppe (14) limitateur de la longueur d'onde est pourvu dans le trajet du rayonnement entre la source de rayonnement (1) et un détecteur (18) dans la station de détection (1-16, 18, 19, 25).

24. Appareil selon l'une quelconque des revendications 17-23, où un diaphragme (15) est agencé dans la trajet du faisceau lumineux.

25. Appareil selon l'une quelconque des revendications 17-24, où la station de détection (1-16, 18, 19, 25) comprend un détecteur (18), et où, en association avec un détecteur (18) dans la station de détection (1-16, 18, 19, 25), est pourvu un miroir de focalisation pour guider les rayons lumineux qui passent par l'article (20; 21) audit détecteur (18) dans la station de détection (1-16, 18, 19, 25).

26. Appareil selon l'une quelconque des revendications 17, 18 ou 19, où la station de détection (1-16, 18, 19, 25) comprend un détecteur (18), et où le processeur (11) est adapté à enregistrer au moins une pointe référence du signal, engendrée par de la lumière non filtrée, dans la séquence de valeurs de signature mesurées provenant dudit détecteur (18) dans la station de détection (1-16, 18, 19, 25) .

27. Appareil selon la revendication 26, **caractérisé en ce que**
le processeur (11) est également adapté à enregistrer au moins un creux référence du signal (Opaque) dans la séquence de valeurs mesurées de signaux, engendré en bloquant les rayons lumineux, et que le processeur (11) comprend en plus un analyseur pour analyser successivement chacune des autres pointes du signal (27) dans la séquence de valeurs mesurées par rapport à une valeur moyenne (28) de deux creux adjacents du signal.

28. Appareil selon la revendication 27, où le processeur (11) est adapté à calculer la signature de transmission lumineuse pour un article (20; 21) sur la base de la valeur (26) du niveau d'une pointe (27) respective du signal moins ladite valeur moyenne (28).

29. Appareil selon la revendication 17 ou 26, où le processeur (11) est adapté à calculer la valeur de la signature de transmission pour un article sur la base du niveau d'une pointe (27) respective du signal en relation avec la valeur d'une pointe de référence adjacente du signal.

30. Appareil selon l'une quelconque des revendications 17, 26, 27, 28 ou 29, **caractérisé en ce que** le processeur (11) est adapté à réunir les résultats du calcul des valeurs mesurées des signatures de transmission d'une séquence de valeurs mesurées dans un vecteur comprenant n éléments, où n est égal au nombre de filtres (10), et à les comparer à des valeurs correspondantes pour une période subséquente de signaux.

31. Appareil selon l'une quelconque des revendications 17, 23-30, où le processeur (11) est adapté à rejeter une mesure d'article si la différence entre les valeurs mesurées de deux séquences successives de signaux dépassent un seuil.

32. Appareil selon l'une quelconque des revendications 17 et 23 - 26, où le processeur (11) est adapté à calculer la valeur moyenne des valeurs mesurées de deux périodes successives de signaux et à effectuer une analyse à l'aide d'une opération de calibrage et d'identification telle que l'analyse discriminante par la méthode des moindres carrés partiels afin de fournir une caractéristique unique du type de matériau duquel l'article (20; 21) est constitué.

33. Appareil selon l'une quelconque des revendications 17 - 32, où au moins un des filtres (10₃ - 10₁₀) parmi le premier nombre de filtres est choisi parmi un groupe de matériaux comprenant le polyéthylène téréphthalate, polyéthylène naphthalate, polychlorure de vinyle, polypropylène, polyéthylène, polystyrène, copolymère acrylonitrile-butadiène-styrène, méthacrylate de polyméthyl, polyamide, polyuréthanne, polysulfonate, polycarbonate et le verre.

34. Appareil selon l'une quelconque des revendications 17 - 33, où l'appareil fait partie d'une récupératrice automatique pour l'identification et le triage de bouteilles (20; 21) de différents types de matériaux.
